# EUROPEAN PATENT SPECIFICATION

(11) **EP 0 703 151 B1**
(45) Date of publication and mention of the grant of the patent: **07.04.1999**
(21) Application number: 95113933.6
(22) Date of filing: 05.09.1995
(51) Int. Cl.: B65C 9/00, B29C 63/00

(54) **Device for peeling off edge portion of sheet provided with release paper**
Abziehvorrichtung eines Randes eines mit Trennpapier versehenen Blattes
Dispositif pour détacher le bord d'une feuille pourvue d'un papier antiadhésif

(30) Priority: 06.09.1994 JP 212380/94
(43) Date of publication of application: 27.03.1996
(60) Divisional application: 97118844.6
(73) Proprietor: KING JIM CO., LTD., Tokyo 101 (JP)
(72) Inventor: Watanabe, Kenji, c/o King Jim Co., Ltd, Chiyoda-ku, Tokyo 101 (JP)
(74) Representative: Grünecker, Kinkeldey, Stockmair & Schwanhäusser Anwaltssozietät

(56) References cited:
- EP-A- 0 383 157
- EP-A- 0 506 257
- EP-A- 0 526 213
- DE-U- 8 802 946
- GB-A- 1 098 039
- GB-A- 2 008 028

## Description

The present invention relates to an edge peeling device for peeling off an edge portion of a sheet provided with release paper, which is formed like elongated or wide tape, so as to facilitate peeling off the entire reease paper.

Generally, as a means for peeling off an edge portion of a sheet with release paper, there has been known a "method for peeling off release paper" described in the Japanese Patent Public Disclosure (kokai) No. 4-294734/1992 Official Gazette. This method for peeling off release paper will be described hereinbelow with reference to FIG. 9.

In this figure, reference numeral 1 designates a sheet with release paper; and 2 what is called a lettering pen. Further, an elongated hole 3, into which the sheet provided with release paper is inserted, is bored in the lettering pen 2.

When peeling the release paper away from the sheet 1 provided with the release paper, the sheet 1 provided with the release paper 1 is first inserted into the elongated hole 3 bored in the lettering pen 2.

Subsequently, the sheet 1 provided with the release paper is pulled out of the elongated hole 3 by rotating the lettering pen 2 by 180 degrees.

The aforementioned conventional means for peeling off an edge portion of a sheet provided with release paper, however, has a drawback in that the peeling-off of release paper from the sheet provided with the release paper is very troublesome because the operations of inserting the sheet 1 provided with the release paper into the elongated hole 3, of rotating the lettering pen 2 to 180 degrees by holding the inserted sheet 1 provided with the release paper, and of pulling out the sheet 1 provided with the release paper by one of operators hands while holding the lettering pen 2 by the other hand should be manually performed.

A device for peeling off a backing sheet from an applique forming a laminate is known from GB 1 098 039 A. Said device having an inlet slot for guiding the laminate to a transport means. In one embodiment of said device, the transport means comprises a so-called reference plate and a rotating roller. In another embodiment of said device, the transport means comprises two rotating rollers. The reference plate and the one roller or the two rollers are arranged to form a small slit for guiding and transporting the laminate to a separating member respectively. Said separating member comprises a narrow sharp plate which projects a predetermined distance from one edge thereof for penetrating between the backing sheet and the applique so as to initiate the splitting of the backing sheet away from the applique if the laminate is transported in the direction to the separating member by the transport means. Since the position of the sharp plate is dependent on the width of the laminate, said device must be adapted in case of laminates having a different width. Therefore, the handling of said device is troublesome.

Accordingly, it is an objective of the present invention to provide an edge peeling device for peeling off an edge portion of a sheet provided with release paper, by which an edge portion of the sheet can be easily peeled off.

According to the present invention, this objective is performed by an edge peeling device according to claim 1 or claim 5.

Preferred embodiments of the invention are laid down in the further dependent claims.

Hereinafter the present invention is illustrated and explained in greater detail by means of preferred embodiments in conjunction with the accompanying drawings wherein:
FIG. 1 is a sectional plan view of an edge peeling device according to a first embodiment;
FIG. 2 is a perspective view of the edge peeling device according to the first embodiment:
FIG. 3 is a sectional diagram for illustrating the configuration of tape;
FIGS. 4 and 5 are schematic diagrams for illustrating working conditions or states of the edge peeling device, according to the first embodiment;
FIG. 6 is a sectional view of another edge peeling device according to a second embodiment;
FIG. 7 is a perspective view of the edge peeling device according to the second embodiment;
FIG. 8 is a sectional plan view of another edge peeling device according to a third embodiment;
FIGS 9(A) to 9(D) are schematic diagrams for illustrating the conventional method for peeling off release paper.

### First Embodiment

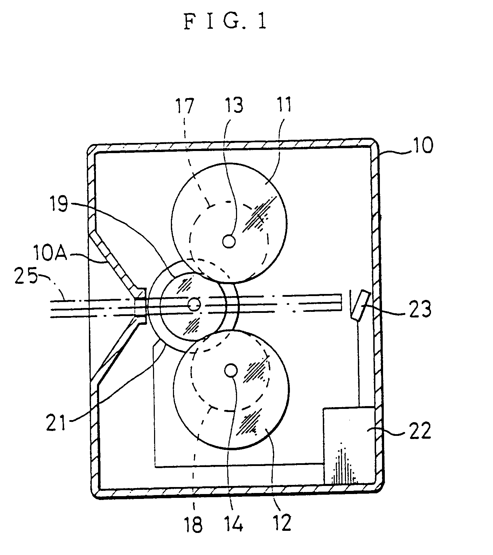

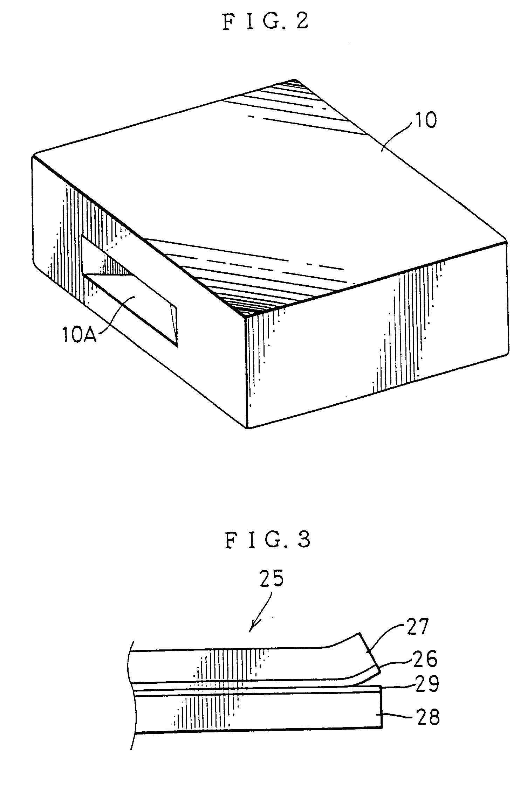

Hereunder, an edge peeling device of this embodiment will be described with reference to FIGS. 1 and 2.

In these figures, reference numeral 10 designate a case composing a casing of the edge peeling device. A guide portion 10A for guiding tape 25 (to be described later) and inserting this tape into the case is provided on a side surface of this case 10 (namely, a left-side surface thereof as viewed in FIG. 1). In the case 10, two eccentric rollers 11 and 12 are placed at positions in such a manner as to face to each other and sandwich the tape 25 which is guided by the guide portion 10 to extend therein. The rotating shafts (or rotation shafts) 13 and 14 of the eccentric rollers 11 and 12 are provided in such a manner as to be parallel with each other. Further, the outer circumferential surfaces of the eccentric rollers 11 and 12 are adapted to come close to each other by maintaining the parallelism therebetween. The amount of eccentricity of each of the eccentric rollers 11 and 12 and the placement of the rotating shafts thereof are set in such a manner that the gap between the outer circumferential surfaces of the rollers 11 and 12 becomes smaller than the thickness of the tape 25, or the rollers 11 and 12 are brought into completely abutting engagement with each other when the rollers 11 and 12 come closest to each other. To cause large frictional resistance between the outer circumferential surface of each of the rollers and the corresponding front or back surface of the tape 25, rubber rollers or rollers, to the outer circumferential surface of each of which an adhesive is applied, are used as the eccentric rollers 11 and 12.

Further, driven gears 17 and 18 are respectively mounted on the rotating shafts 13 and 14 of the eccentric rollers 11 and 12. A driving gear 19, which meshes with the driven gears 17 and 18 and causes these driven gears to rotate in a same direction, is provided therebetween. This driving gear 19 is connected to a drive motor 21. Further, the drive motor 21 is connected to a control portion 22 for controlling this drive motor 21. Moreover, a limit switch 23 for imposing a limitation on the length of an inserted part of the tape 25 (namely, on a position into which the tape 25 is inserted) is connected to the control portion 22. This limit switch 23 is provided in a side end portion of the case 10 (namely, a right-side end portion thereof as viewed in FIG. 1) which is on a prolonged or extension line of the inserted tape 25.

The control portion 22 is established in such a manner as to control the following sequence of operations. Namely, in response to a signal indicating that the tape 25 is put into abutting engagement with the limit switch, the drive motor 21 is activated so as to rotate each of the eccentric rollers 11 and 12 by a set or predetermined angle. Thereafter, the rollers 11 and 12 are turned to original positions thereof, respectively. Here, the set angle is an angle of rotation of each of the eccentric rollers 11 and 12, which are respectively rotated in opposite directions and turned a little more from the position where the outer circumferential surfaces of the rollers 11 and 12 come closest to each other. Thereby, the eccentric rollers 11 and 12 securely sandwich the tape 25 when the eccentric rollers 11 and 12 are in the position where the tape 25 the outer circumferential surfaces of the rollers 11 and 12 come closest to each other. Further, the eccentric rollers 11 and 12 are rotated a little more from such a position. This causes a slide between the front and back surface layers of the tape 25. The set angle may be determined in such a manner that each of the eccentric rollers 11 and 12 is rotated a complete turn and returns to the original position thereof.

Incidentally, in the device having the aforementioned configuration, a drive unit is composed of the drive motor 21, the control portion 22 and the limit switch 23. Further, a drive system is composed of this drive unit, the driven gears 17 and 18 and the driving gear 19.

Moreover, in the case of this embodiment, printing tape 25 is used as a sheet with release paper. As illustrated in FIG. 3, this tape 25 consists of: adhesive sheet or paper 27, on a side face of which a sensitive adhesive 26 is applied; release paper 28 for covering the adhesive 26 of this adhesive sheet or paper 27; and a silicone layer 29 for facilitating the peeling of this release paper 28 from the adhesive 26. Furthermore, polyester, paper or the like may be used as the material of the adhesive sheet 27. Additionally, polyester, polypropylene or the like may be used as the material of the release paper 28.

Next, the practical process of peeling off an edge portion of the tape 25 by use of the edge peeling device having the aforementioned configuration will be described hereinbelow.

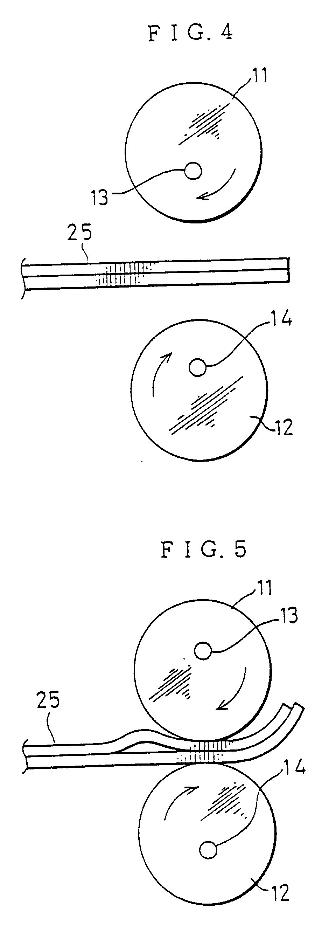

First, the tape 25, the edge portion of which should be peeled off, is inserted from the guide portion 10A into the case 10 until the end of the tape 25 touches the inner part or wall of the case 10. When the end of the tape 25 touches the inner part in the case 10, the limit switch 23 is turned on. Thereby, the control portion 22 activates and causes the drive motor 21 to rotate each of the eccentric rollers 11 and 12 the predetermined set angle. Thus, the tape 25, which has been in the state of FIG. 4, is sandwiched by the eccentric rollers 11 and 12 and a slide between the front and back surface layers of the tape 25 is caused as illustrated in FIG. 5. Namely, a slide between the adhesive sheet 27 and the release paper 28 of the tape 25 is caused. As a result, an edge portion of the release paper 28 is peeled away from the adhesive sheet 27. Thereafter, each of the eccentric rollers 11 and 12 is turned or returned to the original position. Then, the tape 25 is pulled out of the case 10. Subsequently, the peeled edge portion of the release paper 28 is taken by hand. Finally, the entire release paper 28 is peeled away from the adhesive sheet 27.

As described above, an edge portion of the release paper 28 can be easily peeled away from the edge portion of the tape 25 only by inserting the tape 25 from the guide portion 10A and thereafter pulling the tape 25 out of the case 10. Consequently, the release paper 28 can be easily peeled away from the adhesive sheet 27.

### Second Embodiment

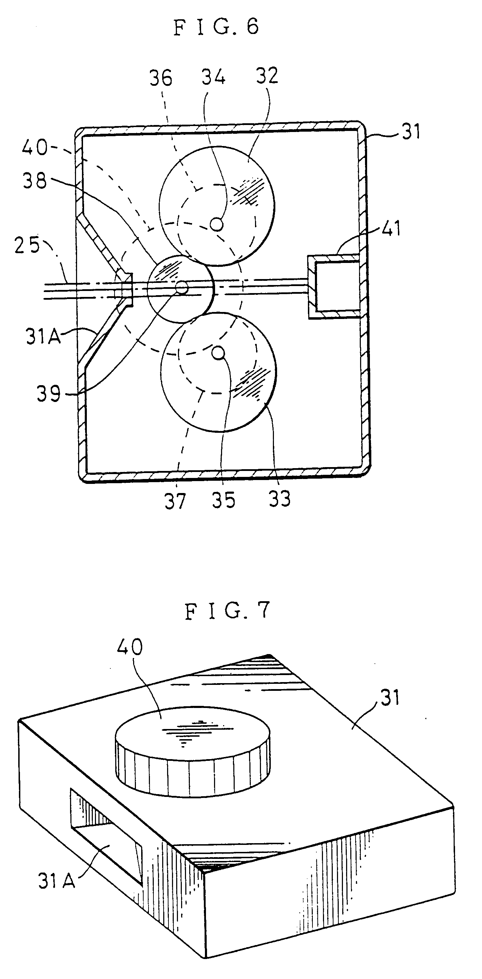

Next, a second embodiment of the present invention will be described hereinbelow. The edge peeling device of this embodiment is a device used for manually performing a peeling operation. FIGS. 6 and 7 illustrate the practical configuration of this embodiment.

In these figures, reference numeral 31 designates a case which composes a casing of this edge peeling device. A guide portion 31A is provided on a side surface of this case 31. Further, two eccentric rollers 32 and 33 are provided in the case 31. The eccentric rollers 32 and 33, rotational or rotating shafts 34 and 35 thereof and driven gears 36 and 37 respectively mounted on the rotating shafts 34 and 35 and a driving gear 38 are similar to the corresponding elements or parts of the aforesaid first embodiment.

A rotating shaft 39 of the driving gear 38 is extended out of the case 31. Further, a knob 40 serving as a grasp portion for manually turning the driving gear 38 is attached to this extended portion of the shaft 39. Moreover, a stopper 41 for imposing a limitation on the length of the inserted part of the tape 25 (or, a limitation on a position (namely, a limit position) to which the tape 25 is inserted) is provided on the other inner side surface of the case 31.

In the case where the release paper 28 of the tape 25 is peeled away from the adhesive sheet or paper 27 thereof, the tape 25 is first inserted from the guide portion 31A to a limit position in the case 31. Subsequently, an operator turns the knob 40 by hand. Thereby, the eccentric rollers 32 and 33 acts similarly as in the case of the eccentric rollers of the first embodiment. Consequently, the release paper 28 of the tape 25 is peeled away from the adhesive sheet 27 thereof.

Thus, in the case of using the device of this embodiment, the release paper 28 can be easily peeled away from an edge portion of the tape 25.

### Third Embodiment

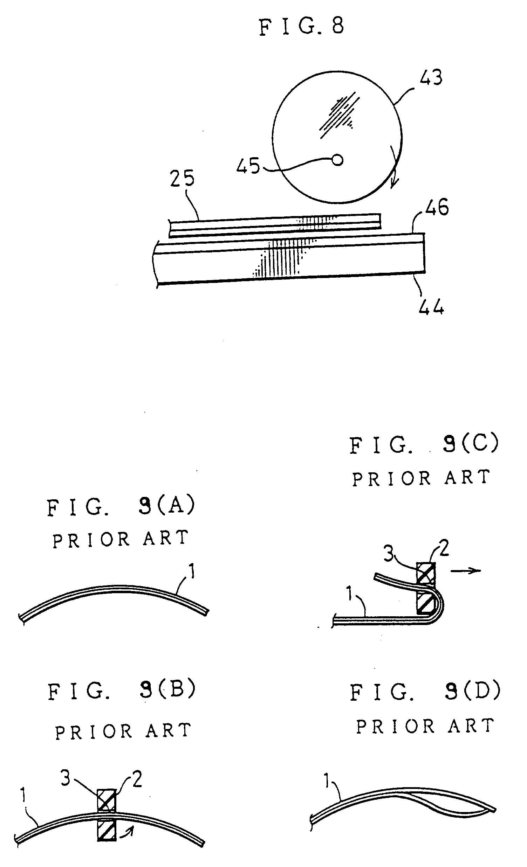

An edge peeling device according to this embodiment will be described hereinbelow with reference to FIG. 8. The configuration of the entire edge peeling device is similar to that of the first embodiment. Thus, same reference characters designate same members or parts of the first embodiment. Further, the description of such members is omitted herein.

The case 10 and the guide portion 10A are similar to those of the first embodiment. In this case 10, an eccentric roller 43 and a supporting plate 44 are respectively placed on both sides of the tape 25, which extends by being guided by the guide portion 10A, in such a manner as to face with each other.

The rotating shaft 45 of the eccentric roller 43 is placed in such a manner as to be parallel with the supporting plate 44. The eccentric roller 43 is adapted to come close to the supporting plate 44 by maintaining the parallelism between the outer circumferential surface of the eccentric roller 43 and a side surface of the supporting plate 44. The amount of eccentricity of the eccentric roller 43 and the placement of the rotating shaft 43 thereof are set in such a manner that the gap between the outer circumferential surface of the roller 43 and the side surface of the supporting plate 44 becomes smaller than the thickness of the tape 25, or the roller 43 is brought into completely abutting engagement with the side surface of the supporting plate 44 when the roller 43 and the plate 44 come closest to each other.

Further, in order to cause large frictional resistance between the outer circumferential surface of the roller 43 and a side surface of the tape 25, a rubber roller or a roller, to the outer circumferential surface of which an adhesive is applied, is used as the eccentric roller 43.

A drive system for rotating the eccentric roller 43 is similar to the drive system of the first or second embodiment.

In the case where the release paper 28 of the tape 25 is peeled away from the adhesive sheet or paper 27 thereof in the edge peeling device having the configuration described hereinabove, the tape 25 is first inserted from the guide portion 31A in the case 31. Subsequently, the eccentric roller 43 is turned by an automatic or manual drive system. When this eccentric roller 43 rotates, the outer circumferential surface of the eccentric roller 43 is brought into abutting engagement with a side surface of the tape 25, which is supported by the supporting plate 44 in such a manner as not to slide. Thereby, the adhesive sheet 27 and the release paper 28 are made to slide in opposite directions, respectively. Consequently, the release paper 28 of the tape 25 is peeled away from the adhesive sheet 27 thereof.

Thus, in the case of using the device of this embodiment, the release paper 28 can be easily peeled away from an edge portion of the tape 25.

### Examples of Modifications of Embodiments

Incidentally, in the case of each of the aforesaid embodiments, the tape 25 is used as a sheet provided with release paper. However, even in the case of a modification using wider sheet-like tape as the sheet provided with release paper, effects and advantages similar to those of the aforementioned embodiments can be obtained.

Further, in the cases of the aforesaid first and second embodiments, the rotating shafts 13 and 14 of the eccentric rollers 11 and 12 are provided in such a manner as to be parallel with each other. The rotating shafts, however, may be provided in such a way as to be inclined with respect to each other. In this case, the adhesive sheet 27 and the release paper 28 of the tape 25 are made to slide in opposite directions which are inclined or perpendicular to the longitudinal direction of the tape.

Additionally, in the cases of the aforementioned second embodiment, the knob 40 is used as the grasp portion. A crank-like lever, however, may be used instead of the knobs. Thereby, this modification can have effects or advantages similar to those of the aforementioned embodiments.

As above described in detail, in the cases of the edge peeling devices of the present invention, an edge portion of a sheet provided with release paper is peeled away therefrom only by inserting the sheet the device and thereafter pulling the inserted sheet out of the device. Consequently, the release paper can be extremely easily peeled away from the sheet.

Although the preferred embodiments of the present invention have been described above, it should be understood that the present invention is to be determined solely by the appended claims.

## Claims

1. Edge peeling device for peeling off an edge portion of a sheet (25) provided with release paper, the sheet having an adhesive paper layer (27), onto a side surface of which an adhesive (26) is applied, and having a release paper layer (28) for covering the adhesive, the edge peeling device comprising:
a guide portion (10A;31A) for guiding insertion of the sheet (25) which is provided with release paper;
two eccentric rollers (11,12;32,33) placed at positions in such a manner as to face to each other and sandwich the sheet (25) provided with the release paper, which is guided by the guide portion (10A;31A) and extends in the device; and
a drive system for rotating the eccentric rollers (11,12;32,33) in a same direction, wherein the sheet (25) provided with the release paper is guided by the guide portion (10A;31A) and is inserted into a space between the eccentric rollers (11,12;32,33), wherein the outer circumferential surfaces of the eccentric rollers (11,12;32,33) are brought into abutting engagement with the adhesive paper layer (27) and the release paper layer (28) of the sheet (25), which respectively serve as a front surface layer and a back surface layer, wherein the adhesive paper layer (27) and the release paper layer (28) of the sheet (25) are made to slide in opposite directions, respectively, by rotating the eccentric rollers (11,12;32,33) by use of the drive system, whereby the release paper layer (28) is peeled away from the adhesive paper layer (27).

2. Edge peeling device according to claim 1, wherein the drive system consists of driven gears (17,18;36,37) attached to each of the eccentric rollers (11,12;32,33), a driving gear (19;38) meshing with each of the driven gears (17,18;36,37), and a drive unit for driving the driving gear (19;38).

3. Edge peeling device according to claim 2, wherein the drive unit consists of a drive motor (21) connected to the driving gear (19), a limit switch (23) for imposing a limitation on a position into which the sheet (25) provided with release paper is inserted, and a control portion (22) for driving the drive motor (21) according to a signal sent from the limit switch (23).

4. Edge peeling device according to claim 2, wherein the drive unit is constituted by a grasp portion (40) which is connected to the driving gear (38) and is used for manually rotating the driving gear (38).

5. Edge peeling device for peeling off an edge portion of a sheet (25) provided with release paper, which sheet has an adhesive paper layer (27), onto a side surface of which an adhesive is applied, and having a release paper layer (28) for covering the adhesive, the edge peeling device comprising:
a guide portion for guiding insertion of the sheet (25) provided with release paper;
a supporting plate (44), placed on a side of the sheet extending in the device by being guided by the guide portion, for supporting a side surface of the sheet (25);
an eccentric roller (43) placed on the other side of the sheet (25) in such a manner that the supporting plate (44) and the eccentric roller (43) sandwich the sheet (25); and
a drive system for rotating the eccentric roller (43), wherein the sheet (25) provided with the release paper is guided by the guide portion and is inserted into a space between the supporting plate (44) and the eccentric roller (43), wherein the outer circumferential surface of the eccentric roller (43) is brought into abutting engagement with one of side surface layers of the sheet (25), which are the adhesive paper layer (27) and the release paper layer (28) of the sheet (25), wherein the adhesive paper layer (27) and the release paper layer (28) of the sheet (25) are made to slide in opposite directions, respectively, by rotating the eccentric roller (43) by use of the drive system when the sheet is supported by the supporting plate (44), whereby the release paper layer (28) is peeled away from the adhesive paper layer (27).

6. Edge peeling device according to claim 5, wherein the drive system consists of a drive gear attached to the eccentric roller (43), a driving gear meshing with the driven gear, and a drive unit for driving the driving gear.

## Patentansprüche

1. Kantenabziehvorrichtung zum Abziehen eines Kantenabschnitts von einem Blatt (25), das mit einem Ablösepapier versehen ist, das Blatt weist eine Klebepapierschicht (27) auf, an dessen Seitenoberfläche ein Kleber (26) angebracht ist, und weist eine Ablösepapierschicht (28) zum Abdecken des Klebers auf, die Kantenabziehvorrichung umfaßt:
einen Führungsabschnitt (10A;31A) zum Führen des Einsetzens des Blattes (25), das mit dem Ablösepapier versehen ist;
zwei exzentrische Rollen (11,12;32,33), die an Positionen derart angeordnet sind, daß sie einander zugewandt sind und das Blatt (25) zwischen ihnen aufnehmen, das mit dem Ablösepapier versehen ist, durch den Führungsabschnitt (10A;31A) geführt ist und sich in die Vorrichtung erstreckt, und
ein Antriebssystem zum Drehen der exzentrischen Rollen (11,12;32,33) in eine gleiche Richtung, wobei das Blatt (25), das mit dem Ablösepapier versehen ist, durch den Führungsabschnitt (10A;31A) geführt ist und in einen Raum zwischen den exzentrischen Rollen (11,12;32,33) eingesetzt ist, wobei die äußeren umlaufenden Oberflächen der exzentrischen Rollen (11,12;32,33) in anstoßenden Eingriff mit der Klebepapierschicht (27) und der Ablösepapierschicht (28) des Blattes (25) gebracht werden, die jeweils als vordere Oberflächenschicht und hintere Oberflächenschicht dienen, wobei die Klebepapierschicht (27) und die Ablösepapierschicht (28) des Blattes (25) ausgebildet sind, um jeweils in unterschiedliche Richtungen durch Drehen der exzentrischen Rollen (11,12;32,33) unter Verwendung des Antriebssystems zu gleiten, wodurch die Ablösepapierschicht (28) von der Klebepapierschicht (27) abgezogen wird.

2. Kantenabziehvorrichtung nach Anspruch 1, wobei das Antriebssystem aus angetriebenen Zahnrädern (17,18;36,37), die an jeder der exzentrischen Rollen (11,12;32,33) angebracht sind, einem Antriebszahnrad (19;38), das in Eingriff mit jedem der angetriebenen Zahnräder (17,18;36,37) ist, und einen Antriebseinheit zum Antreiben des Antriebszahnrads (19;38), besteht.

3. Kantenabziehvorrichtung nach Anspruch 2, wobei die Antriebseinheit aus einem Antriebsmotor (21), der mit dem Antriebszahnrad (19) verbunden ist, einem Begrenzungsschalter (23), um eine Begrenzung der Position zu erreichen, in die das Blatt (25), das mit dem Ablösepapier versehen ist, eingesetzt ist, und einem Steuerabschnitt (22) zum Antrieb des Antriebsmotors (21) gemäß einem Signal, das von dem Begrenzungsschalter (23) ausgesandt ist, besteht.

4. Kantenabziehvorrichtung nach Anspruch 2, wobei die Antriebseinheit durch einen Griffabschnitt (40) gebildet ist, der mit dem Antriebszahnrad (38) verbunden ist, und zur manuellen Drehung des Antriebszahnrad (38) verwendet ist.

5. Kantenabziehvorrichtung zum Abziehen eines Kantenabschnitts von einem Blatt (25), das mit Ablösepapier versehen ist, wobei das Blatt eine Klebepapierschicht (27) aufweist, an dessen Seitenoberfläche ein Kleber angebracht ist, und eine Ablösepapierschicht (28) zur Abdeckung des Klebers aufweist, die Kantenabziehvorrichtung umfaßt:
einen Führungsabschnitt zum Führen des Einsetzens des Blattes (25), das mit Ablösepapier versehen ist;
eine Stützplatte (44), die an einer Seite des Blattes angeordnet ist, das sich in die Vorrichtung erstreckt, wobei es durch den Führungsabschnitt geführt ist zum Stützen einer Seitenoberfläche des Blattes (25);
eine exzentrische Rolle (43), die an der anderen Seite des Blattes (25) derart plaziert ist, daß die Stützplatte (44) und die exzentrische Rolle (43) das Blatt (25) dazwischen aufnehmen; und
ein Antriebssystem zur Drehung der exzentrischen Rolle (43), wobei das Blatt (25), das mit Ablösepapier versehen ist, durch den Führungsabschnitt geführt und in einen Raum zwischen die Stützplatte (44) und der exzentrischen Rolle (43) eingesetzt ist, wobei die äußere Umfangsfläche der exzentrischen Rolle (43) in anstoßendem Eingriff mit einer der Seitenflächenschichten des Blattes (25), welche die Klebepapierschicht (27) und die Ablösepapierschicht (28) des Blattes sind, gebracht wird, wobei die Klebepapierschicht (27) und die Ablösepapierschicht (28) des Blattes (25) ausgebildet sind, um jeweils in entgegengesetzte Richtungen durch die Drehung der exzentrischen Rolle (43) unter Verwendung des Antriebsystems zu gleiten, wenn das Blatt durch die Stützplatte (44) gestützt ist, wodurch die Ablöspapierschicht (28) von der Klebepapierschicht (27) abgezogen wird.

6. Kantenabziehvorrichtung nach Anspruch 5, wobei das Antriebssystem aus einem getriebenen Zahnrad, das mit der exzentrischen Rolle (43) verbunden ist, einem Antriebszahnrad, das in Eingriff mit dem getriebenen Zahrad ist, und einer Antriebseinheit zum Antrieb des Antriebszahnrades, besteht.

## Revendications

1. Dispositif pour détacher un bord destiné à détacher une partie du bord d'une feuille (25), constituée avec un papier anti-adhésif, ladite feuille possédant une couche en papier adhésif (27), sur une surface latérale de laquelle on applique un adhésif (26), et possédant une couche en papier anti-adhésif (28) destinée à couvrir l'adhésif, le dispositif pour détacher un bord comprenant :
- une partie de guidage (10A ; 31A) destinée à guider une insertion de la feuille (25), que l'on constitue avec un papier anti-adhésif ;
- deux rouleaux excentriques (11, 12 ; 32, 33) disposés en des positions d'une telle manière que l'un fait face à l'autre et qu'ils prennent en sandwich la feuille (25) constituée avec le papier anti-adhésif, que l'on guide par la partie de guidage (10A ; 31A), et s'étendent dans le dispositif ; et
- un système d'entraînement destiné à faire tourner les rouleaux excentriques (11, 12 ; 32, 33), dans un même sens,
dans lequel on guide la feuille (25) constituée avec le papier anti-adhésif par la partie de guidage (10A ; 31A), et on l'insère dans un espace entre les rouleaux excentriques (11, 12 ; 32, 33), dans lequel on amène en prise avec butée les surfaces extérieures de circonférence des rouleaux excentriques (11, 12 ; 32, 33) contre la couche en papier adhésif (27) et la couche en papier anti-adhésif (28) de la feuille (25), qui servent respectivement comme une couche de surface frontale et une couche de surface arrière, dans lequel on fait glisser la couche en papier adhésif (27) et la couche en papier anti-adhésif (28) de la feuille (25) selon des directions opposées, respectivement en faisant tourner les rouleaux excentriques (11, 12, 32, 33), en utilisant le système d'entraînement, de sorte que l'on détache en écartant la couche en papier anti-adhésif (28) à partir de la couche en papier adhésif (27).

2. Dispositif pour détacher un bord, selon la revendication 1, dans lequel le système d'entraînement consiste en roues entraînées (17, 18 ; 36, 37) reliées à chacun des rouleaux excentriques (11, 12 ; 32, 33), en une roue d'entraînement (19, 38) venant en prise avec chacune des roues entraînées (17, 18 ; 36, 37), et en un ensemble d'entraînement destiné à entraîner la roue d'entraînement (19, 38).

3. Dispositif pour détacher un bord selon la revendication 2, dans lequel l'ensemble d'entraînement consiste en un moteur d'entraînement (21) connecté à la roue d'entraînement (19), en un contacteur de fin de course (23) destiné à imposer une limitation sur une position dans laquelle on insère la feuille (25) constituée avec un papier anti-adhésif, et en une partie de régulation (22) destinée à commander le moteur d'entraînement (21), conformément à un signal émis par le contacteur de fin de course (23).

4. Dispositif pour détacher un bord, selon la revendication 2, dans lequel on constitue l'ensemble d'entraînement par une partie de préhension (40), que l'on connecte à la roue d'entraînement (38), et que l'on utilise pour faire tourner manuellement la roue d'entraînement (38).

5. Dispositif pour détacher un bord destiné à détacher une partie du bord d'une feuille (25) constituée avec un papier anti-adhésif, laquelle feuille possède une couche en papier adhésif (27), sur une surface latérale de laquelle on applique un adhésif, et possédant une couche en papier anti-adhésif (28) destinée à couvrir l'adhésif, ledit dispositif pour détacher un bord comprenant :
- une partie de guidage destinée à guider une insertion de la feuille (25), constituée avec un papier antiadhésif ;
- une plaque support (44), disposée sur un côté de la feuille s'étendant dans le dispositif, en étant guidée par la partie de guidage, destinée à maintenir une surface latérale de la feuille (25) ;
- un rouleau excentrique (43) disposé sur l'autre côté de la feuille (25), d'une telle manière que la plaque support (44) et le rouleau excentrique (43) prennent en sandwich la feuille (25) ; et
- un système d'entraînement destiné à faire tourner le rouleau excentrique (43),
dans lequel on guide la feuille (25) constituée avec le papier anti-adhésif par la partie de guidage et on l'insère dans un espace entre la plaque support (44) et le rouleau excentrique (43), dans lequel on amène en prise avec butée la surface extérieure de circonférence du rouleau excentrique (43) contre l'une des couches de surface latérale de la feuille (25), qui sont la couche en papier adhésif (27) et la couche en papier anti-adhésif (28) de la feuille (25), dans lequel on fait glisser la couche en papier adhésif (27) et la couche en papier anti-adhésif (28) de la feuille (25) selon des directions opposées, respectivement en faisant tourner le rouleau excentrique (43), en utilisant le système d'entraînement, lorsque l'on maintient la feuille par la plaque support (44), de sorte que l'on détache en écartant la couche en papier anti-adhésif (28) à partir de la couche en papier adhésif (27).

6. Dispositif pour détacher un bord selon la revendication 5, dans lequel le système d'entraînement consiste en une roue d'entraînement, reliée au rouleau excentrique (43), en une roue d'entraînement venant en prise avec la roue entraînée, et en un ensemble d'entraînement destiné à entraîner la roue d'entraînement.
